# EUROPÄISCHE PATENTSCHRIFT

(11) **EP 0 975 468 B1**
(45) Veröffentlichungstag und Bekanntmachung des Hinweises auf die Patenterteilung: **14.04.2004**
(21) Anmeldenummer: 99907458.6
(22) Anmeldetag: 29.01.1999
(51) Int. Cl.: B41M 3/14, B42D 15/00, B42D 15/10, G07D 7/00, G06K 19/14, G09F 3/00

(54) **BEDRUCKTES WERTDOKUMENT MIT EINEM LUMINESZIERENDEN ECHTHEITSMERKMAL**
PRINTED DOCUMENT HAVING A VALUE, WITH LUMINESCENT AUTHENTICITY FEATURE
DOCUMENT DE VALEUR IMPRIME COMPORTANT UNE CARACTERISTIQUE D'AUTHENTICITE LUMINESCENTE

(30) Priorität: 02.02.1998 DE 19804012
(43) Veröffentlichungstag der Anmeldung: 02.02.2000
(73) Patentinhaber: Giesecke & Devrient GmbH, 81677 München (DE)
(72) Erfinder: KAULE, Wittich, D-82275 Emmering (DE); SCHWENK, Gerhard, D-82178 Puchheim (DE); STENZEL, Gerhard, D-82110 Germering (DE)
(74) Vertreter: Klunker . Schmitt-Nilson . Hirsch
(86) Internationale Anmeldenummer: PCT/EP1999/000593
(87) Internationale Veröffentlichungsnummer: WO 1999/038700

(56) Entgegenhaltungen:
- WO-A-81/03507
- WO-A-81/03508
- WO-A-81/03509
- WO-A-81/03510
- FR-A- 2 554 122

## Beschreibung

Die Erfindung betrifft ein bedrucktes Wertdokument mit zumindest einem Echtheitsmerkmal in Form einer lumineszierenden Substanz auf der Basis von mit wenigstens einem Seltenerdmetall dotierten Wirtsgitter.

Die Absicherung von Wertdokumenten mittels lumineszierender Substanzen ist bereits seit langem bekannt. Auch die Verwendung von Seltenerdmetallen wurde in diesem Zusammenhang bereits diskutiert. Sie haben den Vorteil, dass sie schmalbandige Emissionslinien aufweisen, die besonders charakteristisch und deshalb von Emissionen anderer Stoffe messtechnisch sicher unterscheidbar sind. Vorzugsweise werden dabei Stoffe verwendet, die Emissionslinien im unsichtbaren Spektralbereich, insbesondere im infraroten (IR) Spektralbereich aufweisen.

Um den Fälschungsschutz noch zu erhöhen, können die Seltenerdmetalle zusammen mit anderen Stoffen derart in Wirtsgittern eingebaut werden, dass das Anregungs- und/ oder Emissionsspektrum des Seltenerdmetalls in charakteristischer Weise beeinflusst wird. Durch Kombination mit geeigneten absorbierenden Stoffen kann beispielsweise ein Teil der Anregungsund/ oder Emissionsbereiche des Seltenerdmetalls unterdrückt werden. Die Beeinflussung kann jedoch auch in einer "Verformung" z.B. durch Dämpfung bestimmter Bereiche der Anregungs- oder Emissionsspektren bestehen.

Ausgehend von diesem Stand der Technik liegt der Erfindung die Aufgabe zugrunde, ein Wertdokument mit einer Echtheitskennzeichnung in Form von lumineszierenden Substanzen zu schaffen, die gegenüber dem Stand der Technik noch schwerer nachweisbar sind und damit einen erhöhten Fälschungsschutz bieten.

Die Lösung dieser Aufgabe ergibt sich aus den unabhängigen Ansprüchen. Weiterbildungen sind Gegenstand der Unteransprüche.

Wie bereits erläutert, werden zur Echtheitsüberprüfung von Wertdokumenten, die im IR-Spektralbereich liegenden Emissionslinien der Seltenerdmetalle genutzt. Vorzugsweise nutzt man Emissionslinien, die im nahen IR-Bereich liegen, da diese noch mit preiswerten Sensoren detektierbar sind und aufgrund des günstigen Signal-/Rauschverhältnisses Fehlmessungen relativ leicht vermeidbar sind. Üblicherweise verwendet man hierfür handelsübliche Silizium (Si)- oder Germanium (Ge)-Detektoren. Je weiter die Emissionslinien im IR-Spektralbereich liegen, desto schwieriger wird der Nachweis der Emission. Denn ganz allgemein gilt, dass die Detektivität oder Ansprechempfindlichkeit von Fotodetektoren abnimmt, je langwelliger die zu messende Strahlung ist. Das heißt, dass das Signal-/Rauschverhältnis der detektierten Signale mit zunehmender Wellenläge im Allgemeinen geringer wird. Demzufolge werden die zur Auswertung der Signale notwendige Messtechnik und das zu benötigte Know-how immer aufwendiger. Wenn diese messtechnisch schwer nachweisbaren Lumineszenzstoffe darüber hinaus in den zu prüfenden Wertdokumenten nur in geringen Konzentrationen vorliegen, ist ein Nachweis der Emissionslinien nur unter besonderen Bedingungen möglich.

Die Erfindung beruht nun auf der Erkenntnis, dass die mit zunehmender Emissionswellenlänge im IR-Spektralbereich schwierige Nachweisbarkeit bestimmter Substanzen sehr vorteilhaft zur Erhöhung des Fälschungsschutzes genutzt werden kann.

Erfindungsgemäß wird daher zur Absicherung von Wertdokumenten eine lumineszierende Substanz verwendet, deren Emissionsspektrum außerhalb der Ansprechempfindlichkeit von Si- oder Ge-Detektoren oder zumindest an der Grenze der Nachweismöglichkeit eines Ge-Detektors liegt. In diesem Fall muss der messtechnische Aufwand zum Nachweis mit einem Ge-Detektor um ein Vielfaches erhöht oder z.B. auf Bleisulfid (PbS)-, Indiumarsenid (InAs)-, Gallium-Indiumarsenid (GalnAs)- oder Bleiselenid (PbSe)-Detektoren zurückgegriffen werden. Deren Detektivität ist aber um Zehnerpotenzen geringer als die von Si-Detektoren, so dass die messtechnische Auswertung der Signale eines solchen Detektors grundsätzlich deutlich aufwendiger ist.

Die für die Echtheitsabsicherung geeigneten Substanzen können Stoffe auf der Basis von thuliumdotierten Wirtsgittern sein. Thulium weist Emissionslinien im Wellenlängenbereich von 1,6 bis 2,1 µm, insbesondere im Bereich von 1,7 und 1,9 µm auf und kann daher mit Ge-Detektoren nur mit sehr hohem Aufwand nachgewiesen werden, da die Ansprechempfindlichkeit von Ge-Detektoren bei einer Wellenlänge von 1,6 µm bereits sehr klein ist und im Bereich von 1,9 µm gegen null geht. Die erfindungsgemäßen Substanzen können allerdings mit Hilfe von PbS-, InAs- oder GalnAs-Detektoren nachgewiesen werden. Da auch die Ansprechempfindlichkeit dieser Detektoren im Wellenlängenbereich von 1,6 bis 2 µm bereits sehr gering ist, muss das Thulium in ein Wirtsgitter eingesetzt werden, das eine möglichst hohe Effektivität des Thuliums gewährleistet, d.h. für eine möglichst hohe Quantenausbeute sorgt.

Erfindungsgemäß werden Wirtsgitter verwendet, die breitbandig absorbierende Bestandteile enthalten und die absorbierte Energie mit einem hohen Wirkungsgrad auf das Thulium übertragen. Vorzugsweise liegt die Quantenausbeute der erfindungsgemäßen lumineszierenden Substanzen im Bereich von 50 bis 90 %.

Außerdem ist es erfindungsgemäß vorgesehen, die lumineszierende Substanz im jeweiligen Wertdokument in so hoher Konzentration zu verwenden, dass die Eigenschaften des Wertdokuments gerade nicht beeinträchtigt werden. Die maximale Konzentration hängt von verschiedenen Parametern ab, wie z.B. der Art der Einbringung oder den gewünschten Eigenschaften (Farbe oder dergleichen) des Wertdokuments.

Wird der Lumineszenzstoff beispielsweise in eine Papiermasse eingebettet, so liegt die gerade noch zulässige Konzentration von Fremdstoffen bei wenigen Gew.%. Überschreitet man die zulässige Fremdstoffkonzentration, so hat dies deutliche Änderungen der Stoffeigenschaften zur Folge. Eine zu hohe Fremdstoffkonzentration im Papier beispielsweise reduziert die Reißfestigkeit des Papiers. Besitzt der Lumineszenzstoff eine Eigenfarbe, so reicht gegebenenfalls bereits die Konzentration von etwa 0,1 Gew. %, um die Farbe des gesamten Papiers zu verändern. Eine überhöhte Fremdstoffkonzentration in Druckfarben macht die Farben brüchig und reduziert die gute Haftung auf der Dokumentenoberfläche. Auch hier kann bereits eine Konzentration von 1 Gew.% eines farbigen Lumineszenzstoffes genügen, um den Gesamtfarbeindruck der Druckfarbe zu verfälschen. Dient dieser Lumineszenzstoff gleichzeitig als Farbpigment, kann die Grenzkonzentration andererseits auch erst bei dem physikalisch maximal möglichen Feststoffanteil von ca. 80 Gew. % erreicht werden.

Erfindungsgemäß liegt die untere Grenzkonzentration im Falle farbloser oder leicht gefärbter, lumineszierender Substanzen bei Einmischung in die Papiermasse bei 0,1 Gew.%. Bei stärker gefärbten Lumineszenzstoffen kann die Grenzkonzentration auch schon bei 0,01 Gew. % liegen. Vorzugsweise liegt die Konzentration im Bereich von 0,05 bis 1 Gew.%. Die untere Grenzkonzentration der lumineszierenden Substanz in einer auf das Wertdokument aufgebrachten Schicht beträgt dagegen etwa 1 Gew. %, beispielsweise für farbige Lumineszenzstoffe. Je nach Schichtzusammensetzung und Verwendungszweck liegt die Konzentration im Bereich von 1 bis 40 Gew.%, vorzugsweise im Bereich von 10 bis 30 Gew.%.

Das Einbringen der lumineszierenden Substanzen in gerade noch zulässiger, d.h. die genannten Eigenschaften des Wertpapiers nicht verändernder Konzentration verhindert Fälschungsversuche, bei denen in Unkenntnis der echten Lumineszenzstoffe weniger effektive Ersatzstoffe mit ähnlichen Emissionslinien eingesetzt werden, die aber dann, um messbare Signale zu erhalten, in höherer Konzentration dem Wertdokument beigegeben werden müssen. Dies führt zu erkennbaren Veränderungen des Wertdokuments oder der die lumineszierende Substanz enthaltende Druckfarbe. Im Falle farbiger Stoffe würde dies beispielsweise auch zu einer Verfärbung des Wertdokuments oder der Druckfarbe führen.

Die lumineszierenden Substanzen können gemäß der Erfindung auf verschiedenste Art und Weise in das Wertdokument eingebracht werden. So können die lumineszierenden Substanzen beispielsweise, wie bereits erwähnt, einer Druckfarbe zugemischt werden, die zusätzlich visuell sichtbare Farbzusätze enthält. Aber auch ein Zumischen der lumineszierenden Substanz zur Papiermasse ist möglich. Ebenso können die lumineszierenden Substanzen auf oder in einem Kunststoffträgermaterial vorgesehen werden, welches beispielsweise zumindest teilweise in die Papiermasse eingebettetwird. Das Trägermaterial kann hierbei die Form eines Sicherheitsfadens, einer Melierfaser oder einer Planchette haben.

Das Kunststoff- oder Papierträgermaterial kann jedoch auch an jedem beliebigen anderen Gegenstand, z.B. zur Produktsicherung befestigt werden. Das Trägermaterial ist in diesem Fall vorzugsweise in Form eines Etiketts ausgebildet. Wenn das Trägermaterial Bestandteil des zu sichernden Produkts ist, wie es z.B. bei Aufreißfäden der Fall ist, ist selbstverständlich auch jede andere Formgebung möglich. In bestimmten Anwendungsfällen kann es sinnvoll sein, die lumineszierende Substanz als unsichtbare Beschichtung auf dem Wertdokument vorzusehen. Sie kann dabei vollflächig oder auch in Form von bestimmten Mustern,wie z.B. Streifen, Linien, Kreisen oder auch in Form von alphanummerischen Zeichen vorliegen. Um die Unsichtbarkeit des Lumineszenzstoffes zu gewährleisten, muss erfindungsgemäß entweder ein farbloser Lumineszenzstoff in der für die Druckfarbe oder den Beschichtungslack maximalen Konzentration, die gerade noch nicht die Eigenschaften der Beschichtung beeinträchtigt, verwendet werden oder ein farbiger Lumineszenzstoff in einer so geringen Konzentration, dass die Transparenz der Beschichtung gerade noch gegeben ist.

Unter der Bezeichnung "Wertdokument" sind im Rahmen der Erfindung Banknoten, Schecks, Aktien, Wertmarken, Ausweise, Kreditkarten, Pässe und auch andere Dokumente sowie Etiketten, Siegel, Verpackungen oder andere Elemente für die Produktsicherung zu verstehen.

Die erfindungsgemäßen lumineszierenden Substanzen weisen Emissionsspektren auf, die so weit im IR- Spektralbereich liegen, dass sie mit den für diesen Bereicht verfügbaren Detektoren nur unter hohem messtechnischen Aufwand gerade noch nachweisbar sind, wenn sie dem zu markierenden Wertdokument in maximaler, aber das Dokument nicht verändernder Menge zugemischt werden.

Derartige Lumineszenzstoffe werden im Folgenden als "Grenzleuchtstoffe" bezeichnet.

Sie besitzen gegenüber den übrigen, nicht an diesen Grenzen liegenden Leuchtstoffen den sicherungstechnischen Vorteil, dass sie auf anderen technischen Gebieten praktisch nicht eingesetzt werden und daher im Handel auch nicht erhältlich sind. Ferner ist die Nachweistechnik derart aufwendig, dass das Risiko der Analyse der messtechnischen Parameter relativ gering ist. Aber selbst wenn dem Fälscher die Existenz des Lumineszenzstoffs bekannt wäre, könnte er ihn, wie bereits erläutert, nur nachstellen, indem er alle für die Lumineszenz verantwortlichen Parameter exakt nachstellt. Lumineszenzstoffe mit schlechteren Eigenschaften verändern entweder die Eigenschaften des Wertdokuments nachhaltig oder sind in den Detektionseinrichtungen nicht mehr nachweisbar.

Weitere Ausführungsformen und Vorteile der Erfindung werden im Folgenden anhand der Figur und der Beispiele erläutert.
- Fig. 1: Detektivität verschiedener Detektoren,
- Fig.2: Emissionspektren eines erfindungsgemäßen Grenzleuchtstoffs,
- Fig. 3: erfindungsgemäßes Sicherheitselement im Querschnitt.

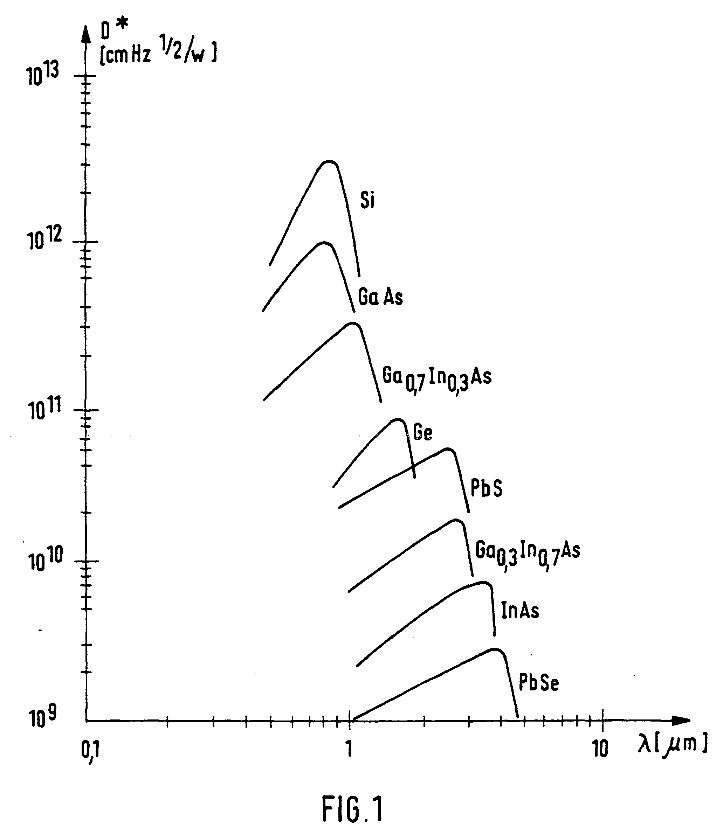

Fig. 1 zeigt die Detektivität D* verschiedener Detektoren in Abhängigkeit von der Wellenlänge λ. Sie ist ein Maß für die Ansprechempfindlichkeit des Detektors. Aus Gründen der Übersichtlichkeit wurden die Kurven nur im Bereich ihres Empfindlichkeitsmaximums dargestellt. Aus dieser Figur ergibt sich, dass Si- und GaAs-Detektoren im Bereich oberhalb 1,1 µm nicht mehr eingesetzt werden können. Die Empfindlichkeit von Galiumarsenid kann durch Indiumzusätze weiter in den IR-Spektralbereich verschoben werden. So ist ein Ga_{0,7}In_{0,3}As-Detektor bis etwa 1,2 µm einsetzbar, während ein Ga_{0,3}In_{0,7}As-Detektor bis etwa 3 µm einsetzbar ist. Allerdings nimmt in diesem Bereich die Detektivität stark ab. Aus dieser Figur ergibt sich ferner, dass Ge-Detektoren bis etwa 1,8 µm verwendbar sind und dass im Bereich bis zu 3 µm vorzugsweise PbS-Detektoren oder entsprechend angepasste GaₓInₓ₋₁As-Detektoren verwendet werden. Der Index x wird dabei so gewählt, dass das Detektivitätsmaximum bei der gewünschten Grenzwellenlänge liegt. Prinzipiell sind auch InAs-oder PbSe-Detektoren einsetzbar. Ihre Detektivität liegt jedoch noch eine Zehnerpotenz unter derjenigen von PbS-Detektoren. Zudem liegt das Detektivitätsmaximum bereits im Wellenlängenbereich von ca. 3 bis 4 µm, so dass sie für den Nachweis von Thulium nicht optimal geeignet sind.

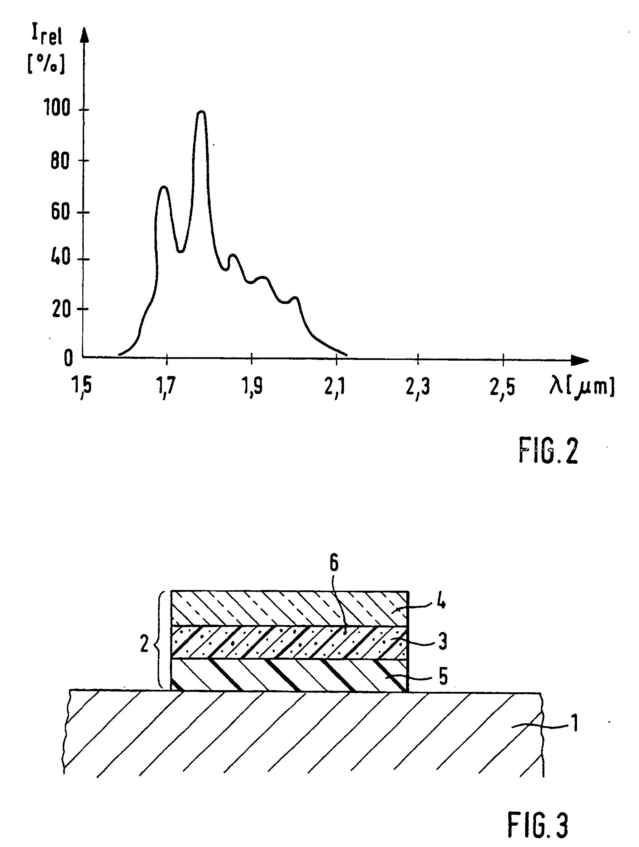

In Fig. 2 ist das Emissionsspektrum eines erfindungsgemäßen thuliumdotierten Grenzleuchtstoffes dargestellt. Die im sichtbaren und gegebenenfalls im nahen IR auftretenden Emissionslinien des Thuliums werden durch das Wirtsgitter unterdrückt. Wie aus Fig. 2 ersichtlich, emittiert der Grenzleuchtstoff im Wellenlängenbereich zwischen ca. 1,6 und 2,1 µm, und hier insbesondere im Bereich von 1,7 und 1,9 µm. Vergleicht man dieses Emissionsspektrum mit den in Fig. 1 dargestellten Detektivitätskurven der Sensoren, so stellt man fest, dass das Emissionsspektrum des erfindungsgemäßen Grenzleuchtstoffes mit Detektoren hoher Detektivität, d.h. mit Si- oder GaAs-Detektoren nicht nachgewiesen werden kann. Mit Ge-Detektoren, deren Detektivitätsmaximum bereits weiter in den IR-Spektralbereich verschoben ist, können Teile des in Fig. 2 gezeigten Emissionspektrums unter hohem Aufwand gerade noch gemessen werden. Aber erst mit PbS-Detektoren ist ein voller Nachweis des gesamten Spektrums möglich. Diese Detektoren sind jedoch um ca. 2 Zehnerpotenzen weniger empfindlich als Silizium. Das bedeutet, dass das Signal-/ Rauschverhältnis wesentlich schlechter ist als bei Si-Detektoren und daher ein höherer messtechnischer Aufwand notwendig ist, um das Lumineszenzsignal des Grenzleuchtstoffes auswerten zu können. Gemäß der Erfindung wird gerade jedoch dieser Umstand dazu genutzt, die Fälschungssicherheit zu erhöhen.

Das Wirtsgitter für das erfindungsgemäße optisch aktive Thulium hat im Wellenlängenbereich von 1 µm bis 10 µm einen optisch transparenten Bereich. Das erfindungsgmäße Wirtsgitter enthält ferner als absorbierende Elemente Eisen oder Chrom, die praktisch im gesamten sichtbaren Spektralbereich absorbieren und damit anstelle der in diesem Bereich auftretenden einzelnen Anregungslinien des Thuliums einen größeren und an breitbandig leuchtende Lichtquellen besser angepassten Anregungsbereich haben.

Vorzugsweise weisen die erfindungsgemäßen Grenzleuchtstoffe eine Granat- oder Perovskitstruktur auf. Um eine möglichst hohe Effektivität des Thuliums zu garantieren, werden im Falle einer Granatstruktur Wirtsgitter mit der allgemeinen Formel

A₃M₅₋ₓAlₓO₁₂

verwendet, worin A für ein Element aus der Gruppe Scandium (Sc), Yttrium (Y), Lanthan (La) und Gadolinium (Gd); M für Eisen (Fe) oder Chrom (Cr) steht und der Index x die Bedingung 0 < x < 4,99, vorzugsweise 0,5 < x < 2, erfüllt.

Gemäß einer bevorzugten Ausführungsform besteht das Wirtsgitter aus einem Yttrium-Aluminium-Eisen-Granat. Der sich hieraus ergebende Grenzleuchtstoff lässt sich durch die Formel

Y_{3-z}Tm_{z}Fe₅₋ₓAlₓO₁₂

beschreiben, worin der Index z die Bedingung 0,01 < z < 2, vorzugsweise 0,1 < z < 0,5 erfüllt.

Über den Anteil an nichtabsorbierendem Aluminium lässt sich die Absorption und damit die Helligkeit einer eventuell vorhandenen Eigenfarbe des Stoffes einstellen, so dass die lumineszierende Substanz auch in höherer Konzentration als Zusatzstoff für hellere Druckfarben eingesetzt werden kann.

Wird für das Wirtsgitter eine Perovskitstruktur verwendet, so lässt sich diese durch die allgemeine Formel

AMO₃

beschreiben, worin
A für ein Element aus der Gruppe Scandium (Sc), Yttrium (Y) und der Lanthanide und
M für Eisen (Fe) oder Chrom (Cr) steht.

Die bevorzugte Ausführungsform für einen Leuchtstoff in einer Perovskitstruktur wird durch die Formel

Y_{1-z}Tm_{z}CrO₃

beschrieben, worin der Index z die Bedingung 0,01 < z < 0,8, vorzugsweise 0,1 < z < 0,5 erfüllt.

Der Anregungsbereich dieser Grenzleuchtstoffe liegt im sichtbaren Spektralbereich und gegebenenfalls zusätzlich im nahen IR. Dieser Bereich deckt sich mit dem Strahlungsbereich von starken Lichtquellen, wie Halogenlampen, Blitzlampen oder dergleichen.

Im Folgenden werden einige Beispiele der erfindungsgemäßen Grenzleuchtstoffe näher erläutert.

### Beispiel 1:

### Herstellung von thuliumaktiviertem Yttrium-Chrom-Mischgranat (Y_{2,8}Tm_{0,2}Cr_{1,2}Al_{3,8}O₁₂):

49,43 g Yttriumoxid (Y₂O₃), 30,28 g Aluminiumoxid (Al₂O₃), 14,26 g Chrom(III)oxid (Cr₂O₃), 6,03 g Thuliumoxid (Tm₂O₃) und 100 g entwässertes Natriumsulfat (Na₂SO₄) werden innig vermischt und im Korundtiegel 12 Stunden auf 1100 °C erhitzt.

Nach dem Abkühlen wird das Reaktionsprodukt zerkleinert, mit Wasser das Flussmittel herausgewaschen, als Nebenprodukt entstandenes Natriumchromat mit Schwefelsäure/Eisen(II)sulfat zu Chrom(III)sulfat reduziert und bei 100 °C an Luft getrocknet. Zur Erzielung einer möglichst hohen Kornfeinheit wird das Pulver anschließend in einer Rührwerkskugelmühle in Wasser vermahlen bis eine mittlere Korngröße von kleiner als 1 µm vorliegt.

Nach dem Filtrieren und Trocknen erhält man ein hellgrünes Pulver.

### Beispiel 2:

### Herstellung von thuliumaktiviertem Yttrium-Chrom-Perovskit (Y_{0,9}Tm_{0.1}CrO₃):

51,61 g Yttriumoxid (Y₂O₃), 38,6 g Chromoxid (Cr₂O₃), 9,79 g Thuliumoxid (Tm₂O₃) und 100 g entwässertes Natriumsulfat (Na₂SO₄) werden innig vermischt und in einem Korundtiegel 20 Stunden auf 1100 °C erhitzt.

Nach dem Abkühlen wird das Reaktionsprodukt zerkleinert, mit Wasser das Flussmittel herausgewaschen, als Nebenprodukt entstandenes Natriumchromat mit Schwefelsäure/Eisen(II)sulfat zu Chrom(III)sulfat reduziert und bei 100 °C an Luft getrocknet. Zur Erzielung einer möglichst hohen Kornfeinheit wird das Pulver anschließend in einer Rührwerkskugelmühle in Wasser entsprechend vermahlen.

Nach dem Filtrieren und Trocknenerhält man ein Pulver mit einer mittleren Korngröße von kleiner als 1 µm.

### Beispiel 3:

### Herstellung von thuliumaktiviertem Gadolinium-Aluminium-Eisen-Mischgranat (Gd_{2,9}Tm_{0,1}Fe_{3,5}Al_{1,5}O₁₂):

58,35 g Gadoliniumoxid (Gd₂O₃), 8,49 g Aluminiumoxid (Al₂O₃), 31,02 g Eisenoxid (Fe₂O₃), 2,14 g Thuliumoxid (Tm₂O₃) und 100 g entwässertes Natriumsulfat (Na₂SO₄) werden innig vermischt und im Korundtiegel 12 Stunden auf 1100 % erhitzt.

Nach dem Abkühlen wird das Reaktionsprodukt zerkleinert, mit Wasser das Flussmittel herausgewaschen, abfiltriert und bei 100 °C an Luft getrocknet. Zur Erzielung einer möglichst hohen Kornfeinheit wird das Pulver anschließend in einer Rührwerkskugelmühle entsprechend in Wasser vermahlen.

Nach dem Filtrieren und Trocknen erhält man ein grünes Pulver mit einer mittleren Korngröße von kleiner als 1 µm.

Erfindungsgemäß wird die Fälschungssicherheit zusätzlich erhöht, wenn die lumineszierende Substanz in der für das jeweilige Wertdokument bzw. Sicherheitselement maximalen Konzentration verwendet wird. Die maximale Konzentration hängt dabei von verschiedenen Parametern ab, wie z.B. der Art der Einbringung oder den gewünschten Eigenschaft des Wertdokuments bzw. Sicherheitselements.

Fig. 3 zeigt eine Ausführungsform des erfindungsgemäßen Sicherheitselements. Das Sicherheitselement besteht in diesem Fall aus einem Etikett 2, das sich aus einer Papier- oder Kunststoffschicht 3, einer transparenten Abdeckschicht 4 sowie einer Klebstoffschicht 5 zusammensetzt. Dieses Etikett 2 ist über die Kleberschicht 5 mit einem beliebigen Substrat 1 verbunden. Bei diesem Substrat 1 kann es sich um Wertdokumente, Ausweise, Pässe, Urkunden oder dergleichen aber auch um andere zu sichernde Gegenstände, wie beispielsweise CDs, Verpackungen o. ä. handeln.

Der Lumineszenzstoff 6 ist in diesem Ausführungsbeispiel im Volumen der Schicht 3 enthalten. Handelt es sich bei der Schicht 3 um eine Papierschicht, so beträgt die Grenzkonzentration an Lumineszenzstoff erfindungsgemäß zwischen 0,05 und 1 Gew.%.

Alternativ könnte der Grenzleuchtstoff auch in einer nicht gezeigten Druckfarbe enthalten sein, die auf eine der Etikettenschichten, vorzugsweise auf die Oberfläche der Schicht 3 aufgedruckt wird. Die erfindungsgemäß gerade noch mögliche Maximalkonzentration bewegt sich in diesem Fall im Bereich von 10 bis 40 Gew.%.

Statt den Lumineszenzstoff in oder auf einem Trägermaterial vorzusehen, das anschließend als Sicherheitselement auf einem Gegenstand befestigt wird, ist es gemäß der Erfinding auch möglich, die lumineszierende Substanz direkt in das zu sichernde Wertdokument bzw. auf dessen Oberfläche in Form einer Beschichtung vorzusehen.

## Patentansprüche

1. Bedrucktes Wertdokument mit zumindest einem Echtheitsmerkmal in Form einer lumineszierenden Substanz auf der Basis von mit wenigstens einem Seltenerdmetall dotierten Wirtsgitter, das im Wesentlichen im sichtbaren Spektralbereich absorbiert und anregbar ist und zumindest in Teilbereichen des IR-Spektralbereichs transparent ist, wobei das Seltenerdmetall Thulium ist und der Lumineszenzstoff im Volumen des Wertdokuments in einer so hohen Konzentration vorliegt, dass die Eigenschaften des Wertdokuments gerade nicht beeinträchtigt werden.

2. Bedrucktes Wertdokument nach Anspruch 1, **dadurch gekennzeichnet, dass** der Lumineszenzstoff in einer Konzentration von höchstens 5 Gew. % im Dokumentenmaterial enthalten ist.

3. Bedrucktes Wertdokument nach Anspruch 1 oder 2, **dadurch gekennzeichnet, dass** das Wertdokument aus Papier besteht und die lumineszierende Substanz im Papier in einer Konzentration von 0,05 bis 1 Gew. % vorliegt.

4. Bedrucktes Wertdokument mit zumindest einem Echtheitsmerkmal in Form einer lumineszierenden Substanz auf der Basis von mit wenigstens einem Seltenerdmetall dotierten Wirtsgitter, das im Wesentlichen im sichtbaren Spektralbereich absorbiert und anregbar ist und zumindest in Teilbereichen des IR-Spektralbereichs transparent ist, wobei das Seltenerdmetall Thulium ist und der Lumineszenzstoff in einer auf dem Wertdokument aufgebrachten Schicht in einer so hohen Konzentration vorliegt, dass die Eigenschaften der Schicht gerade nicht beeinträchtigt werden.

5. Bedrucktes Wertdokument nach Anspruch 4, **dadurch gekennzeichnet, dass** die auf das Wertdokument aufgebrachte Schicht eine Druckfarbe ist, in welcher die lumineszierende Substanz in einer Konzentration von 1 bis 40 Gew. %, vorzugsweise von 10 bis 30 Gew. %, vorliegt.

6. Bedrucktes Wertdokument nach Anspruch 4 oder 5, **dadurch gekennzeichnet, dass** die lumineszierende Substanz als unsichtbare zumindest teilweise Beschichtung auf dem Wertdokument vorgesehen ist.

7. Bedrucktes Wertdokument nach Anspruch 4, **dadurch gekennzeichnet, dass** die lumineszierende Substanz einer Druckfarbe zugemischt ist, die zusätzlich visuell sichtbare Farbzusätze enthält.

8. Bedrucktes Wertdokument nach wenigstens einem der Ansprüche 4 bis 7, **dadurch gekennzeichnet, dass** die Beschichtung die Form eines oder mehrerer Streifen aufweist.

9. Bedrucktes Wertdokument nach wenigstens einem der Ansprüche 1 bis 8, **dadurch gekennzeichnet, dass** der optisch transparente Bereich des mit Seltenerdmetallen dotierten Wirtsgitters im Bereich zwischen 1 µm und 10 µm liegt.

10. Bedrucktes Wertdokument nach wenigstens einem der Ansprüche 1 bis 9, **dadurch gekennzeichnet, dass** das Wirtsgitter als absorbierende Elemente Eisen oder Chrom enthält.

11. Bedrucktes Wertdokument nach wenigstens einem der Ansprüche 1 bis 10, **dadurch gekennzeichnet, dass** das Wirtsgitter eine Granat- oder Perovskitstruktur aufweist.

12. Bedrucktes Wertdokument nach wenigstens einem der Ansprüche 1 bis 11, **dadurch gekennzeichnet, dass** sich die Granatstruktur durch die allgemeine Formel
A₃M₅₋ₓAlₓO₁₂
beschreiben lässt, worin
A für ein Element aus der Gruppe Yttrium, Gadolinium, Scandium, und Lanthan;
M für Eisen oder Chrom steht und der Index x die Bedingung 0 < x < 4,99 erfüllt.

13. Bedrucktes Wertdokument nach Anspruch 12, **dadurch gekennzeichnet, dass** der Index x die Bedingung 0 < x < 2 erfüllt.

14. Bedrucktes Wertdokument nach Anspruch 12 oder 13, **dadurch gekennzeichnet, dass** sich die lumineszierende Substanz durch die allgemeine Formel
Y_{3-z}Tm_{z}Fe₅₋ₓAlₓO₁₂
beschreiben lässt, worin der Index z die Bedingung 0,01 < z < 2, vorzugsweise 0,1 < z< 1 erfüllt.

15. Bedrucktes Wertdokument nach wenigstens einem der Ansprüche 1 bis 11, **dadurch gekennzeichnet, dass** sich die Perovskitstruktur durch die allgemeine Formel
AMO₃
beschreiben lässt, worin
A für ein Element aus der Gruppe Scandium, Yttrium und der Lanthanide; M für Eisen oder Chrom steht.

16. Bedrucktes Wertdokument nach Anspruch 15, **dadurch gekennzeichnet, dass** sich die lumineszierende Substanz durch die allgemeine Formel
Y_{1-z}Tm_{z}CrO₃
beschreiben lässt, worin der Index z die Bedingung 0,01 < z < 0,8, vorzugsweise 0,1 < z < 0,5 erfüllt.

17. Bedrucktes Wertdokument nach einem der Ansprüche 1 bis 16, **dadurch gekennzeichnet, dass** die lumineszierende Substanz eine Quantenausbeute von 50 bis 90 % aufweist.

18. Sicherheitselement, welches zumindest ein Trägermaterial und eine lumineszierende Substanz auf der Basis von mit wenigstens einem Seltenerdmetall dotierten Wirtsgitter aufweist, das im Wesentlichen im sichtbaren Spektralbereich absorbiert und anregbar ist und zumindest in Teilbereichen des IR-Spektralbereichs transparent ist, wobei das Seltenerdmetall Thulium ist, und die lumineszierende Substanz in einer so hohen Konzentration im Volumen des Trägermaterials vorhanden ist, dass die Eigenschaften des Sicherheitselements gerade nicht beeinträchtigt werden.

19. Sicherheitselement nach Anspruch 18, **dadurch gekennzeichnet, dass** das Trägermaterial aus Papier besteht, und die lumineszierende Substanz im Papier in einer Konzentration von höchstens 6 Gew.%, vorzugsweise im Bereich von 0,05 bis 1 Gew. % vorliegt.

20. Sicherheitselement nach Anspruch 18, **dadurch gekennzeichnet, dass** das Trägermaterial aus Kunststoff besteht, und die lumineszierende Substanz im Kunststoff in einer Konzentration von höchstens 2. Gew. % vorliegt.

21. Sicherheitselement, welches zumindest ein Trägermaterial und eine lumineszierende Substanz auf der Basis von mit wenigstens einem Seltenerdmetall dotierten Wirtsgitter aufweist, das im Wesentlichen im sichtbaren Spektralbereich absorbiert und anregbar ist und zumindest in Teilbereichen des IR-Spektralbereichs transparent ist, wobei das Seltenerdmetall Thulium ist, und der Lumineszenzstoff in einer auf das Trägermaterial aufgebrachten Schicht in einer so hohen Konzentration vorliegt, dass die Eigenschaften der aufgebrachten Schicht gerade nicht beeinträchtigt werden.

22. Sicherheitselement nach Anspruch 21, **dadurch gekennzeichnet, dass** die lumineszierende Substanz in einer Druckfarbe in einer Konzentration im Bereich von 1 bis 40 Gew. %, vorzugsweise von 10 bis 30 Gew. % vorliegt.

23. Sicherheitselement nach einem der Ansprüche 18 bis 22, **dadurch gekennzeichnet, dass** das Sicherheitselement die Form eines Streifens oder Bandes aufweist.

24. Sicherheitselement nach Anspruch 23, **dadurch gekennzeichnet, dass** das Trägermaterial als Sicherheitsfaden oder Melierfaser ausgebildet ist.

25. Sicherheitselement nach wenigsten einem der Ansprüche 18 bis 23, **dadurch gekennzeichnet, dass** das Sicherheitselement als Etikett ausgebildet ist.

## Claims

1. A printed document of value having at least one authenticity feature in the form of a luminescent substance based on a host lattice doped with at least one rare earth metal which absorbs and is excitable substantially in the visible region of the spectrum and is transparent in at least parts of the IR spectral region, whereby the rare earth metal is thulium and the luminescent substance is present in the volume of the document of value in a concentration such that the properties of the document of value are only just not impaired.

2. A printed document of value according to claim 1, **characterized in that** the luminescent substance is contained in the document material in a concentration of no more than 5% by weight.

3. A printed document of value according to claim 1 or 2, **characterized in that** the document of value consists of paper and the luminescent substance is present in the paper in a concentration of from 0.05 to 1% by weight.

4. A printed document of value having at least one authenticity feature in the form of a luminescent substance based on a host lattice doped with at least one rare earth metal which absorbs and is excitable substantially in the visible region of the spectrum and is transparent in at least parts of the IR spectral region, whereby the rare earth metal is thulium and the luminescent substance is present in a layer applied to the document of value in a concentration such that the properties of the layer are only just not impaired.

5. A printed document of value according to claim 4, **characterized in that** the layer applied to the document of value is a printing ink in which the luminescent substance is present in a concentration of from 1 to 40% by weight, preferably from 10 to 30% by weight.

6. A printed document of value according to claim 4 or 5, **characterized in that** the luminescent substance is provided on the document of value as an invisible at least partial coating.

7. A printed document of value according to claim 4, **characterized in that** the luminescent substance is admixed to a printing ink additionally containing visually visible color additives.

8. A printed document of value according to at least one of claims 4 to 7, **characterized in that** the coating has the form of one or more stripes.

9. A printed document of value according to at least one of claims 1 to 8, **characterized in that** the optically transparent range of the host lattice doped with rare earth metals is in the region between 1 micron and 10 microns.

10. A printed document of value according to at least one of claims 1 to 9, **characterized in that** the host lattice contains iron or chromium as absorptive elements.

11. A printed document of value according to at least one of claims 1 to 10, **characterized in that** the host lattice has a garnet or perovskite structure.

12. A printed document of value according to claim 11, **characterized in that** the garnet structure can be described by the general formula
A₃M₅₋ₓAlₓO₁₂
where
A stands for an element from the group of yttrium, gadolinium, scandium and lanthanum;
M stands for iron or chromium, and the index x fulfills the condition 0<x<4.99.

13. A printed document of value according to claim 12, **characterized in that** the index x fulfills the condition 0<x<2.

14. A printed document of value according to claim 12 or 13, **characterized in that** the luminescent substance can be described by the formula
Y_{3-z}Tm_{z}Fe₅₋ₓAlₓO₁₂
where the index z fulfills the condition 0.01<z<2, preferably 0.1<z<1.

15. A printed document of value according to at least one of claims 1 to 11, **characterized in that** the perovskite structure can be described by the general formula
AMO₃
where
A stands for an element from the group of scandium, yttrium and the lanthanides; M stands for iron or chromium.

16. A printed document of value according to claim 15, **characterized in that** the luminescent substance can be described by the formula
Y_{1-z}Tm_{z}CrO₃
where the index z fulfills the condition 0.01<z<0.8, preferably 0.1<z<0.5.

17. A printed document of value according to any of claims 1 to 16, **characterized in that** the luminescent substance has a quantum yield of from 50 to 90%.

18. A security element having at least a substrate material and a luminescent substance based on a host lattice doped with at least one rare earth metal which absorbs and is excitable substantially in the visible region of the spectrum and is transparent in at least parts of the IR spectral region, whereby the rare earth metal is thulium and the luminescent substance is present in the volume of the substrate material in a concentration such that the properties of the security element are only just not impaired.

19. A security element according to claim 18, **characterized in that** the substrate material consists of paper, and the luminescent substance is present in the paper in a concentration of no more than 6% by weight, preferably in the range of from 0.05 to 1% by weight.

20. A security element according to claim 18, **characterized in that** the substrate material consists of plastic, and the luminescent substance is present in the plastic in a concentration of no more than 2% by weight.

21. A security element having at least a substrate material and a luminescent substance based on a host lattice doped with at least one rare earth metal which absorbs and is excitable substantially in the visible region of the spectrum and is transparent in at least parts of the IR spectral region, whereby the rare earth metal is thulium and the luminescent substance is present in a layer applied to the substrate material in a concentration such that the properties of the applied layer are only just not impaired.

22. A security element according to claim 21, **characterized in that** the luminescent substance is present in a printing ink in a concentration in the range of from 1 to 40% by weight, preferably from 10 to 30% by weight.

23. A security element according to any of claims 18 to 22, **characterized in that** the security element has the form of a stripe or band.

24. A security element according to claim 23, **characterized in that** the substrate material is formed as a security thread or mottling fiber.

25. A security element according to at least one of claims 18 to 23, **characterized in that** the security element is in the form of a label.

## Revendications

1. Document de valeur imprimé comportant au moins un élément d'authentification sous la forme d'une substance luminescente, sur la base d'au moins un réseau hôte doté d'un métal des terres rares, qui est essentiellement absorbée et excitée dans le domaine spectral visible et est transparente au moins dans des zones partielles du domaine spectral IR, le métal des terres rares étant du thulium et la substance luminescente se trouvant dans l'épaisseur du document de valeur à une concentration à un niveau tel que les propriétés du document de valeur ne sont juste pas affectées.

2. Document de valeur imprimé selon la revendication 1, **caractérisé en ce que** la substance luminescente est contenue dans le matériau du document à une concentration d'au plus 5 % en poids.

3. Document de valeur imprimé selon la revendication 1 ou 2, **caractérisé en ce que** le document de valeur est en papier et **en ce que** la substance luminescente est présente dans le papier à une concentration de 0,05 à 1 % en poids.

4. Document de valeur imprimé comportant au moins un élément d'authentification sous la forme d'une substance luminescente, sur la base d'au moins un réseau hôte doté d'un métal des terres rares, qui est essentiellement absorbée et excitée dans le domaine spectral visible et est transparente au moins dans des zones partielles du domaine spectral IR, le métal des terres rares étant le thulium et la substance luminescente étant présente dans une couche appliquée sur le document de valeur à une concentration à un niveau tel que les propriétés de la couche ne sont juste pas affectées.

5. Document de valeur imprimé selon la revendication 4, **caractérisé en ce que** la couche appliquée sur le document de valeur est une encre d'imprimerie dans laquelle la substance luminescente est présente à une concentration de 1 à 40 % en poids, de préférence de 10 à 30 % en poids.

6. Document de valeur imprimé selon la revendication 4 ou 5, **caractérisé en ce que** la substance luminescente est prévue en tant que couche de revêtement invisible au moins partiellement sur le document de valeur.

7. Document de valeur imprimé selon la revendication 4, **caractérisé en ce que** la substance luminescente est mélangée à une encre d'imprimerie qui contient en outre des additifs de coloration visibles à l'oeil nu.

8. Document de valeur imprimé selon l'une au moins des revendications 4 à 7, **caractérisé en ce que** la couche de revêtement se présente sous la forme d'un ou plusieurs rubans.

9. Document de valeur imprimé selon l'une au moins des revendications 1 à 8, **caractérisé en ce que** le domaine optiquement transparent du réseau hôte doté du métal des terres rares se situe dans la plage allant de 1 µm à 10 µm.

10. Document de valeur imprimé selon l'une au moins des revendications 1 à 9, **caractérisé en ce que** le réseau hôte contient du fer ou du chrome comme élément absorbant.

11. Document de valeur imprimé selon l'une au moins des revendications 1 à 10, **caractérisé en ce que** le réseau hôte présente une structure de grenat ou de pérovskite.

12. Document de valeur imprimé selon l'une au moins des revendications 1 à 11, **caractérisé en ce que** la structure de grenat est décrite par la formule générale
A₃M₅₋ₓAlₓO₁₂
dans laquelle
A est un élément du groupe yttrium, gadolinium, scandium et lanthane ;
M est le fer ou le chrome, et l'indice x vérifie la condition 0 < x < 4,99.

13. Document de valeur imprimé selon la revendication 12, **caractérisé en ce que** l'indice x vérifie la condition 0 < x < 2.

14. Document de valeur imprimé selon la revendication 12 ou 13, **caractérisé en ce que** la substance luminescente est décrite par la formule générale
Y_{3-z}Tm_{z}Fe₅₋ₓAlₓO₁₂
dans laquelle l'indice z vérifie la condition 0,01 < z < 2, de préférence 0,1 < z < 1.

15. Document de valeur imprimé selon l'une au moins des revendications 1 à 11, **caractérisé en ce que** la structure de pérovskite est décrite par la formule générale
AMO₃
dans laquelle
A est un élément du groupe scandium, yttrium et du groupe des lanthanides ;
M est le fer ou le chrome.

16. Document de valeur imprimé selon la revendication 15, **caractérisé en ce que** la substance luminescente est décrite par la formule générale
Y_{1-z}Tm_{z}CrO₃
dans laquelle l'indice z vérifie la condition 0,01 < z < 0,8, de préférence 0,1 < z < 0,5.

17. Document de valeur imprimé selon l'une des revendications 1 à 16, **caractérisé en ce que** la substance luminescente présente un rendement quantique de 50 à 90 %.

18. Élément de sécurité présentant au moins un matériau support et une substance luminescente, sur la base d'au moins un réseau hôte doté d'un métal des terres rares, qui peut essentiellement être absorbée et excitée dans le domaine spectral visible et est transparente au moins dans des zones partielles du domaine spectral IR, le métal des terres rares étant du thulium et la substance luminescente étant présente dans l'épaisseur du document de valeur à une concentration à un niveau tel que les propriétés de l'élément de sécurité ne sont juste pas affectées.

19. Élément de sécurité selon la revendication 18, **caractérisé en ce que** le matériau support est en papier et la substance luminescente est présente dans le papier à une concentration d'au plus 6 % en poids, de préférence dans la plage allant de 0,05 à 1 % en poids.

20. Élément de sécurité selon la revendication 18, **caractérisé en ce que** le matériau support est en matière plastique et la substance luminescente est présente dans la matière plastique à une concentration d'au plus 2 % en poids.

21. Élément de sécurité présentant au moins un matériau support et une substance luminescente, sur la base d'au moins un réseau hôte doté d'un métal des terres rares, qui est essentiellement absorbée et excitée dans le domaine spectral visible et est transparente au moins dans des zones partielles du domaine spectral IR, le métal des terres rares étant du thulium et la substance luminescente étant présente dans une couche appliquée sur le matériau support à une concentration à un niveau tel que les propriétés de la couche appliquée ne sont juste pas affectées.

22. Élément de sécurité selon la revendication 21, **caractérisé en ce que** la substance luminescente est présente dans une encre d'imprimerie à une concentration dans la plage allant de 1 à 40 % en poids, de préférence de 10 à 30 % en poids.

23. Élément de sécurité selon l'une des revendications 18 à 22, **caractérisé en ce que** l'élément de sécurité se présente sous la forme d'un ruban ou d'une bande.

24. Élément de sécurité selon la revendication 23, **caractérisé en ce que** le matériau support est réalisé sous la forme d'un fil de sécurité ou de fibres mélangées.

25. Élément de sécurité selon l'une au moins des revendications 18 à 23, **caractérisé en ce que** l'élément de sécurité est réalisé sous la forme d'une étiquette.
